# EUROPEAN PATENT SPECIFICATION

(11) **EP 3 583 759 B1**
(45) Date of publication and mention of the grant of the patent: **24.08.2022**
(21) Application number: 18753991.1
(22) Date of filing: 15.02.2018
(51) Int. Cl.: H04L 67/12, H04L 69/40, H04L 69/18, H04W 4/38, H04W 84/18, H04W 88/10, H04L 69/326, G05B 19/05

(54) **SYSTEM AND METHOD FOR A MULTI-PROTOCOL WIRELESS SENSOR NETWORK**
SYSTEM UND VERFAHREN FÜR EIN DRAHTLOSES MEHRPROTOKOLL-SENSORNETZWERK
SYSTÈME ET PROCÉDÉ POUR RÉSEAU DE CAPTEURS SANS FIL À PROTOCOLES MULTIPLES

(30) Priority: 20.02.2017 US 201715437383
(43) Date of publication of application: 25.12.2019
(73) Proprietor: Honeywell International Inc., Morris Plains, NJ 07950 (US)
(72) Inventor: GANDHI, Amol, Morris Plains New Jersey 07950 (US); SAMUDRALA, Prasad, Morris Plains New Jersey 07950 (US); RIZWAN, Mohammed, Morris Plains New Jersey 07950 (US); BHAYANI, Falgun, Morris Plains New Jersey 07950 (US); FELIX, Joseph, New Jersey 07950 (US); MCLAUGHLIN, Paul F., Morris Plains New Jersey 07950 (US)
(74) Representative: Houghton, Mark Phillip
(86) International application number: PCT/US2018/018376
(87) International publication number: WO 2018/152330

(56) References cited:
- WO-A1-2016/103064
- US-A1- 2012 127 971
- US-A1- 2012 246 612
- US-A1- 2013 021 167
- US-A1- 2013 021 167
- US-A1- 2013 142 180
- US-A1- 2014 232 555
- US-A1- 2014 269 744
- US-A1- 2014 321 443
- US-A1- 2014 321 443
- US-A1- 2014 355 581
- US-A1- 2016 100 437
- AMITABH MISHRA ET AL: "On Scheduling Guaranteed Time Slots for Time Sensitive Transactions in IEEE 802.15.4 Networks", MILITARY COMMUNICATIONS CONFERENCE, 2007. MILCOM 2007. IEEE, IEEE, PISCATAWAY, NJ, USA, 29 October 2007 (2007-10-29), pages 1-7, XP031232787, ISBN: 978-1-4244-1512-0

## Description

### TECHNICAL FIELD

This disclosure relates generally to industrial process control and automation systems. More specifically, this disclosure relates to a system and method for integrating an IEC 61131-3 environment with multi-protocol wireless sensor networks.

### BACKGROUND

Industrial process control and automation systems are often used to automate large and complex industrial processes. These types of systems routinely include various components including field devices (e.g., sensors, actuators, etc.) and controllers. The controllers typically receive measurements from certain field devices (e.g., sensors) and generate control signals for other field devices (e.g., actuators).

End customers of industrial process control and automation system components often use the best available products in the field. Because there is not a standard wireless connection method for different field devices, a system can require multiple wireless connection methods. In this context, US 2014/355581 A1 relates to industrial control systems. More specifically, this disclosure relates to an apparatus and method for providing a common interface for multiple wireless communication protocols.

### SUMMARY

This disclosure provides a system and method for integrating an IEC 61131-3 environment with multi-protocol wireless sensor networks according to independent claims 1 and 6.

Other technical features may be readily apparent to one skilled in the art from the following figures, descriptions, and claims.

### BRIEF DESCRIPTION OF THE DRAWINGS

For a more complete understanding of this disclosure, reference is now made to the following description, taken in conjunction with the accompanying drawings, in which:
FIGURE 1 illustrates an example industrial process control and automation system according to this disclosure;
FIGURE 2 illustrates an example device for performing functions according to this disclosure.
FIGURE 3 illustrates an example programmable logic controller (PLC) wireless multi-protocol system according to this disclosure;
FIGURE 4 illustrates an example PLC wireless multi-protocol system according to this disclosure;
FIGURE 5 illustrates an example time division multiple access (TDMA) segregation on a single physical layer according to this disclosure;
FIGURE 6 illustrates an example access point (AP) or line power filed routers (LPFR) layer implementation approach according to this disclosure;
FIGURE 7 illustrates an example PLC wireless system including redundant PLCs with redundant field device access points (FDAPs) having redundant links to at least one field device (FD) according to this disclosure; and
FIGURE 8 illustrates an exemplary process for integrating an IEC 61131-3 environment with a multi-protocol wireless sensor network according to this disclosure.

### DETAILED DESCRIPTION

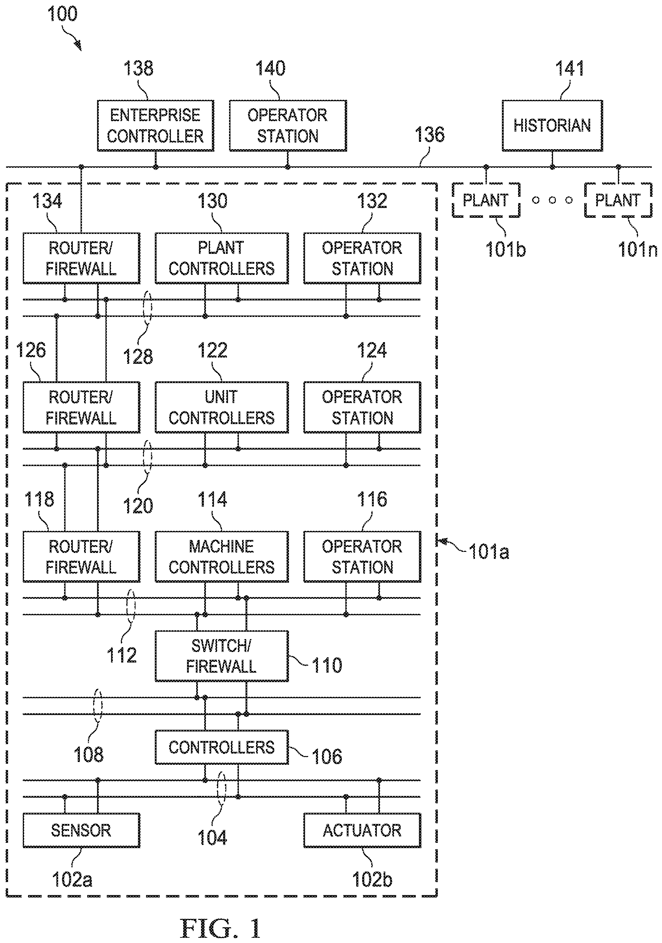

FIGURES 1 through 8, discussed below, and the various embodiments used to describe the principles of the present invention in this patent document are by way of illustration only and should not be construed in any way to limit the scope of the invention. Those skilled in the art will understand that the principles of the invention may be implemented in any type of suitably arranged device or system.

Industrial wireless technology is an ideal fit for the PLC, such that a user can use the benefit of wireless technology specifically made to fit for a PLC environment and the needs of the PLC platform.

For wireless I/O integration to be suitable in the PLC context, it needs to have one or more of the following characteristics: supports IEC 61131-3 languages and is designed for PLC pricing, which are lower than DCS control and IO. The PLC has unique features that include (1) native support for ISA100/WirelessHART wireless devices; (2) use of time division multiple access (TDMA) segregation on a single physical layer (IEEE 802.15.4 to accommodate ISA100 and WirelessHART device types): (3) optimized functionality support for multi-protocol wireless input/output (I/O) considering key low power requirement of PLC; (4) no separate key distribution mechanism for provisioning wireless devices, which is accomplished by a built-in provisioning mechanism with auto-discovery; (5) no additional power consumption with an integrated wireless system manager and a security manager on the same PLC platform; (6) wireless diagnostic parameters such as battery status, device uptime and process value status are made available to be used in PLC control logic; (7) provision to import vendor supplied device specific DD files into PLC and device specific parameters is made available for PLC control logic; (8) single integrated configuration tool/builder for PLC configuration, logic programming and wireless configuration/diagnostics; and (9) complete on board redundancy support ensuring no single point of failure for wireless I/O.

FIGURE 1 illustrates an example industrial process control and automation system 100 according to this disclosure. As shown in FIGURE 1, the system 100 includes various components that facilitate production or processing of at least one product or other material. For instance, the system 100 is used here to facilitate control over components in one or multiple plants 101a-101n. Each plant 101a-101n represents one or more processing facilities (or one or more portions thereof), such as one or more manufacturing facilities for producing at least one product or other material. In general, each plant 101a-101n may implement one or more processes and can individually or collectively be referred to as a process system. A process system generally represents any system or portion thereof configured to process one or more products or other materials in some manner.

In FIGURE 1, the system 100 is implemented using the Purdue model of process control. In the Purdue model, "Level 0" may include one or more sensors 102a and one or more actuators 102b. The sensors 102a and actuators 102b represent components in a process system that may perform any of a wide variety of functions. For example, the sensors 102a could measure a wide variety of characteristics in the process system, such as temperature, pressure, or flow rate. Also, the actuators 102b could alter a wide variety of characteristics in the process system. The sensors 102a and actuators 102b could represent any other or additional components in any suitable process system. Each of the sensors 102a includes any suitable structure for measuring one or more characteristics in a process system. Each of the actuators 102b includes any suitable structure for operating on or affecting one or more conditions in a process system.

At least one network 104 is coupled to the sensors 102a and actuators 102b. The network 104 facilitates interaction with the sensors 102a and actuators 102b. For example, the network 104 could transport measurement data from the sensors 102a and provide control signals to the actuators 102b. The network 104 could represent any suitable network or combination of networks. As particular examples, the network 104 could represent an Ethernet network, an electrical signal network (such as a HART or FOUNDATION FIELDBUS network), a pneumatic control signal network, or any other or additional type(s) of network(s). Also, network 104 could represent a network of multiple-protocol wireless sensor networks.

In the Purdue model, "Level 1" may include one or more controllers 106, which are coupled to the network 104. Among other things, each controller 106 may use the measurements from one or more sensors 102a to control the operation of one or more actuators 102b. For example, a controller 106 could receive measurement data from one or more sensors 1 02a and use the measurement data to generate control signals for one or more actuators 102b. Multiple controllers 106 could also operate in redundant configurations, such as when one controller 106 operates as a primary controller while another controller 106 operates as a backup controller (which synchronizes with the primary controller and can take over for the primary controller in the event of a fault with the primary controller). Each controller 106 includes any suitable structure for interacting with one or more sensors 102a and controlling one or more actuators 102b. Each controller 106 could, for example, represent a multivariable controller, such as a robust multivariable predictive control technology (RMPCT) controller or other type of controller implementing model predictive control (MPC) or other advanced predictive control (APC). As a particular example, each controller 106 could represent a computing device running a real-time operating system.

Two networks 108 are coupled to the controllers 106. The networks 108 facilitate interaction with the controllers 106, such as by transporting data to and from the controllers 106. The networks 108 could represent any suitable networks or combination of networks. As particular examples, the networks 108 could represent a pair of Ethernet networks or a redundant pair of Ethernet networks, such as a FAULT TOLERANT ETHERNET (FTE) network from HONEYWELL INTERNATIONAL INC.

At least one switch/firewall 110 couples the networks 108 to two networks 112. The switch/firewall 110 may transport traffic from one network to another. The switch/firewall 110 may also block traffic on one network from reaching another network. The switch/firewall 110 includes any suitable structure for providing communication between networks, such as a HONEYWELL CONTROL FIREWALL (CF9) device. The networks 112 could represent any suitable networks, such as a pair of Ethernet networks or an FTE network.

In the Purdue model, "Level 2" may include one or more machine-level controllers 114 coupled to the networks 112. The machine-level controllers 114 perform various functions to support the operation and control of the controllers 106, sensors 102a, and actuators 102b, which could be associated with a particular piece of industrial equipment (such as a boiler or other machine). For example, the machine-level controllers 114 could log information collected or generated by the controllers 106, such as measurement data from the sensors 102a or control signals for the actuators 102b. The machine-level controllers 114 could also execute applications that control the operation of the controllers 106, thereby controlling the operation of the actuators 102b. In addition, the machine-level controllers 114 could provide secure access to the controllers 106. Each of the machine-level controllers 114 includes any suitable structure for providing access to, control of, or operations related to a machine or other individual piece of equipment. Each of the machine-level controllers 114 could, for example, represent a server computing device running a MICROSOFT WINDOWS operating system. Although not shown, different machine-level controllers 114 could be used to control different pieces of equipment in a process system (where each piece of equipment is associated with one or more controllers 106, sensors 102a, and actuators 102b).

One or more operator stations 116 are coupled to the networks 112. The operator stations 116 represent computing or communication devices providing user access to the machine-level controllers 114, which could then provide user access to the controllers 106 (and possibly the sensors 102a and actuators 102b). As particular examples, the operator stations 116 could allow users to review the operational history of the sensors 102a and actuators 102b using information collected by the controllers 106 and/or the machine-level controllers 114. The operator stations 116 could also allow the users to adjust the operation of the sensors 102a, actuators 102b, controllers 106, or machine-level controllers 114. In addition, the operator stations 116 could receive and display warnings, alerts, or other messages or displays generated by the controllers 106 or the machine-level controllers 114. Each of the operator stations 116 includes any suitable structure for supporting user access and control of one or more components in the system 100. Each of the operator stations 116 could, for example, represent a computing device running a MICROSOFT WINDOWS operating system.

At least one router/firewall 118 couples the networks 112 to two networks 120. The router/firewall 118 includes any suitable structure for providing communication between networks, such as a secure router or combination router/firewall. The networks 120 could represent any suitable networks, such as a pair of Ethernet networks or an FTE network.

In the Purdue model, "Level 3" may include one or more unit-level controllers 122 coupled to the networks 120. Each unit-level controller 122 is typically associated with a unit in a process system, which represents a collection of different machines operating together to implement at least part of a process. The unit-level controllers 122 perform various functions to support the operation and control of components in the lower levels. For example, the unit-level controllers 122 could log information collected or generated by the components in the lower levels, execute applications that control the components in the lower levels, and provide secure access to the components in the lower levels. Each of the unit-level controllers 122 includes any suitable structure for providing access to, control of, or operations related to one or more machines or other pieces of equipment in a process unit. Each of the unit-level controllers 122 could, for example, represent a server computing device running a MICROSOFT WINDOWS operating system. Additionally or alternatively, each controller 122 could represent a multivariable controller, such as a HONEYWELL C300 controller. Although not shown, different unit-level controllers 122 could be used to control different units in a process system (where each unit is associated with one or more machine-level controllers 114, controllers 106, sensors 102a, and actuators 102b).

Access to the unit-level controllers 122 may be provided by one or more operator stations 124. Each of the operator stations 124 includes any suitable structure for supporting user access and control of one or more components in the system 100. Each of the operator stations 124 could, for example, represent a computing device running a MICROSOFT WINDOWS operating system.

At least one router/firewall 126 couples the networks 120 to two networks 128. The router/firewall 126 includes any suitable structure for providing communication between networks, such as a secure router or combination router/firewall. The networks 128 could represent any suitable networks, such as a pair of Ethernet networks or an FTE network.

In the Purdue model, "Level 4" may include one or more plant-level controllers 130 coupled to the networks 128. Each plant-level controller 130 is typically associated with one of the plants 101a-101n, which may include one or more process units that implement the same, similar, or different processes. The plant-level controllers 130 perform various functions to support the operation and control of components in the lower levels. As particular examples, the plant-level controller 130 could execute one or more manufacturing execution system (MES) applications, scheduling applications, or other or additional plant or process control applications. Each of the plant-level controllers 130 includes any suitable structure for providing access to, control of, or operations related to one or more process units in a process plant. Each of the plant-level controllers 130 could, for example, represent a server computing device running a MICROSOFT WINDOWS operating system.

Access to the plant-level controllers 130 may be provided by one or more operator stations 132. Each of the operator stations 132 includes any suitable structure for supporting user access and control of one or more components in the system 100. Each of the operator stations 132 could, for example, represent a computing device running a MICROSOFT WINDOWS operating system.

At least one router/firewall 134 couples the networks 128 to one or more networks 136. The router/firewall 134 includes any suitable structure for providing communication between networks, such as a secure router or combination router/firewall. The network 136 could represent any suitable network, such as an enterprise-wide Ethernet or other network or all or a portion of a larger network (such as the Internet).

In the Purdue model, "Level 2" may include one or more enterprise-level controllers 138 coupled to the network 136. Each enterprise-level controller 138 is typically able to perform planning operations for multiple plants 101a-101n and to control various aspects of the plants 101a-101n. The enterprise-level controllers 138 can also perform various functions to support the operation and control of components in the plants 101a-101n. As particular examples, the enterprise-level controller 138 could execute one or more order processing applications, enterprise resource planning (ERP) applications, advanced planning and scheduling (APS) applications, or any other or additional enterprise control applications. Each of the enterprise-level controllers 138 includes any suitable structure for providing access to, control of, or operations related to the control of one or more plants. Each of the enterprise-level controllers 138 could, for example, represent a server computing device running a MICROSOFT WINDOWS operating system. In this document, the term "enterprise" refers to an organization having one or more plants or other processing facilities to be managed. Note that if a single plant 101a is to be managed, the functionality of the enterprise-level controller 138 could be incorporated into the plant-level controller 130.

Access to the enterprise-level controllers 138 may be provided by one or more operator stations 140. Each of the operator stations 140 includes any suitable structure for supporting user access and control of one or more components in the system 100. Each of the operator stations 140 could, for example, represent a computing device running a MICROSOFT WINDOWS operating system.

Various levels of the Purdue model can include other components, such as one or more databases. The database(s) associated with each level could store any suitable information associated with that level or one or more other levels of the system 100. For example, a historian 141 can be coupled to the network 136. The historian 141 could represent a component that stores various information about the system 100. The historian 141 could, for instance, store information used during production scheduling and optimization. The historian 141 represents any suitable structure for storing and facilitating retrieval of information. Although shown as a single centralized component coupled to the network 136, the historian 141 could be located elsewhere in the system 1 00, or multiple historians could be distributed in different locations in the system 100,

In particular embodiments, the various controllers and operator stations in FIGURE 1 may represent computing devices. For example, each of the controllers and operator stations could include one or more processing devices and one or more memories for storing instructions and data used, generated, or collected by the processing device(s). Each of the controllers and operator stations could also include at least one network interface, such as one or more Ethernet interfaces or wireless transceivers.

As described in more detail below, various components in the system 100 could be designed or modified to operate in integrating an IEC 61131-3 environment with multi-protocol wireless sensor networks of the system 100. For example, one or more sensors 102a and actuators 102b could be coupled using a multi-protocol wireless sensor network 104.

Although FIGURE 1 illustrates one example of an industrial process control and automation system 100, various changes may be made to FIGURE 1. For example, the system 100 could include any number of sensors, actuators, controllers, servers, operator stations, networks, and other components. Also, the makeup and arrangement of the system 100 in FIGURE 1 is for illustration only. Components could be added, omitted, combined, or placed in any other suitable configuration according to particular needs. Further, particular functions have been described as being performed by particular components of the system 100. This is for illustration only. In general, control and automation systems are highly configurable and can be configured in any suitable manner according to particular needs.

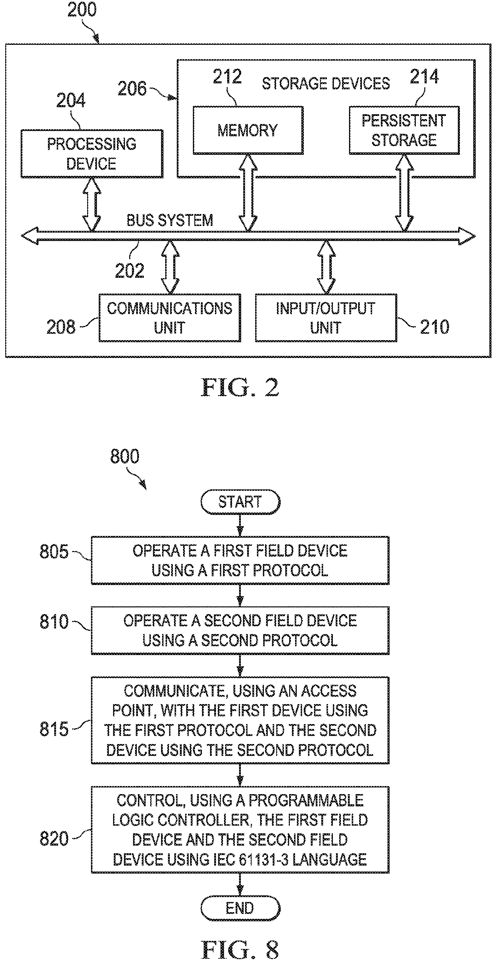

FIGURE 2 illustrates an example device 200 for performing functions according to this disclosure. As an example, the device 200 could represent one of the operator stations 116, 124, 132, 140 or the historian 141 of FIGURE 1. As another example, the device 200 could represent a field device containing a sensor 102a or actuator 102b of FIGURE 1.

As shown in FIGURE 2, the device 200 can include a bus system 202, which supports communication between at least one processing device 204, at least one storage device 206, at least one communications unit 208, and at least one input/output (I/O) unit 210. The processing device 204 executes instructions that may be loaded into a memory 212. The processing device 204 may include any suitable number(s) and type(s) of processors or other devices in any suitable arrangement. Example types of processing devices 204 include microprocessors, microcontrollers, digital signal processors, field programmable gate arrays, application specific integrated circuits, and discrete circuitry.

The memory 212 and a persistent storage 214 are examples of storage devices 206, which represent any structure(s) capable of storing and facilitating retrieval of information (such as data, program code, and/or other suitable information on a temporary or permanent basis). The memory 212 may represent a random access memory or any other suitable volatile or non-volatile storage device(s). The persistent storage 214 may contain one or more components or devices supporting longer-term storage of data, such as a ready only memory, hard drive, Flash memory, or optical disc. In accordance with this disclosure, the memory 212 and the persistent storage 214 may be configured to store instructions associated with integrating an IEC 61131-3 environment with multi-protocol wireless sensor networks.

The communications unit 208 supports communications with other systems, devices, or networks, such as the networks 101-103. For example, the communications unit 208 could include a network interface that facilitates communications over at least one Ethernet network, LCN, or ELCN. The communications unit 208 could also include a wireless transceiver facilitating communications over at least one wireless network. The communications unit 208 may support communications through any suitable physical or wireless communication link(s).

The I/O unit 210 allows for input and output of data. For example, the I/O unit 210 may provide a connection for user input through a keyboard, mouse, keypad, touchscreen, or other suitable input device. The I/O unit 210 may also send output to a display, printer, or other suitable output device.

Although FIGURE 2 illustrates one example of a device 200 for performing functions associated with this disclosure, various changes may be made to FIGURE 2. For example, various components in FIGURE 2 could be combined, further subdivided, or omitted and additional components could be added according to particular needs. Also, computing devices can come in a wide variety of configurations, and FIGURE 2 does not limit this disclosure to any particular configuration of device.

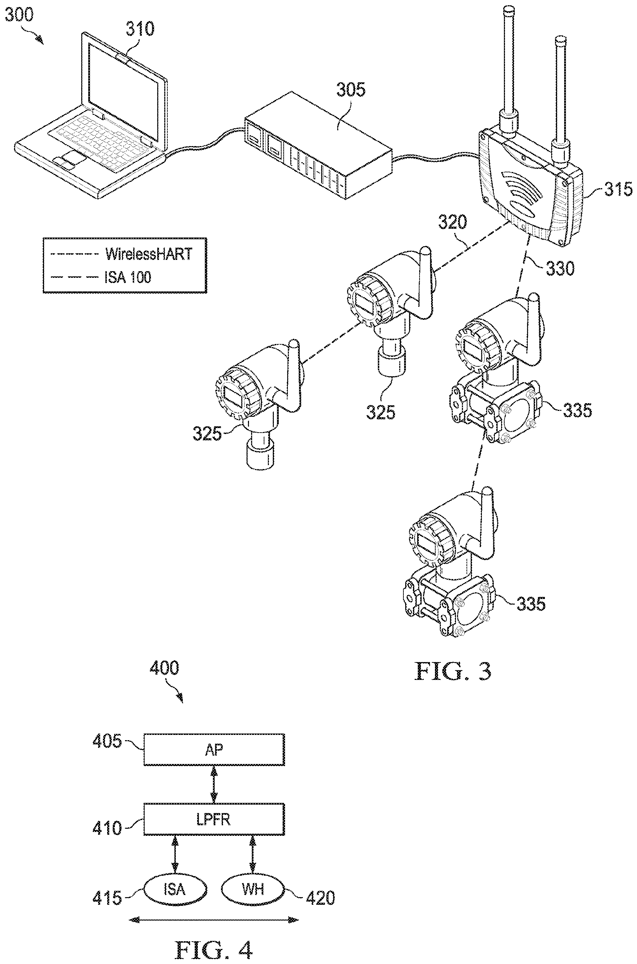

FIGURE 3 illustrates an example PLC wireless multi-protocol system 300 according to this disclosure. As an example, the PLC wireless multi-protocol system 300 could represent a multi-protocol wireless network 104 in the system 100 of FIGURE 1.

Field devices are sometimes structured with different wireless protocols. An access point 315 is provided to service multiple wireless protocols. In the illustrated example, the two wireless protocols that are used include ISA100 and WirelessHART. Also, note that while a single PLC 305 is shown here, the system 300 could include any number of PLCs 305 distributed in one or more geographical areas.

The PLC 305 represents a device or system that provides localized control and data access at a site that is remote from a control or supervisory control and data acquisition (SCADA) system 310 (referred to generally as a "control system"). For example, the PLC 305 could be positioned at or near an oil, gas, or water well or power substation. In these or other situations, the PLC 305 can be used to collect data from local sensors and process the data to generate control signals for local actuators. The PLC 305 can also interact with the control system 310 as needed. In this way, process control and automation functions can be provided at locations remote from the control system 310. The control system 310 is shown as communicating with the PLC 305 using wired via serial or Ethernet communications.

The PLC 305 can also communicate with various wireless industrial field devices via one or more field device access points (FDAPs) 315. Note that the connection(s) between the PLC 305 and the field device access point(s) 315 could be wired. The PLC 305 and the field device access points 315 have the ability to communicate with wireless field devices using different protocols. For example, the PLC 305 and the field device access points 315 could communicate with a first wireless field device network 320 containing wireless field devices 325 and with a second wireless field device network 330 containing wireless field devices 335. The field device networks 320 and 330 could support the use of different communication protocols. Note that while the networks 320 and 330 are shown as being separated here, the networks 320 and 330 could partially or completely overlap.

Each wireless field device 325 and 335 could perform any desired function in the system 300. For example, the wireless field devices 325 and 335 could include wireless sensors, wireless actuators, and other wireless industrial devices. The wireless field devices 325 and 335 in the networks 320 and 330 could support any suitable wireless communication protocols. In some embodiments, for instance, the wireless field devices 335 in the network 330 could support an ISA 100.11a protocol, and the wireless field devices 325 in the network 320 could support a Wireless Highway Addressable Remote Transducer (WirelessHART) protocol.

As described in more detail below, the PLC 305 incorporates a wireless device manager (WDM) that facilitates communication with the wireless field devices 325 and 335 using different protocols. The PLC 305 with the wireless device manager can therefore both communicate using multiple protocols and manage wireless resources in multiple wireless networks. Additional details regarding the PLC 305 are provided below.

The PLC 305 includes any suitable structure for providing localized data access and control. The control system 310 includes any suitable structure(s) for providing industrial process control and automation. Each field device 325 and 335 includes any suitable structure for performing one or more operations related to industrial process control and automation, such as sensing or actuation. Each field device access point 315 represents any suitable structure providing wireless access to field devices.

FIGURE 4 illustrates an example PLC wireless multi-protocol system 400 according to this disclosure. As an example, PLC wireless multi-protocol system 400 could represent a multi-protocol wireless network 104 in the system 100 of FIGURE 1.

The system 400 includes an AP 405, a line power field router (LPFR) 410, an ISA group 415, and a WirelessHART group 420. The LPFR 410 is used by the AP 405 to connect to the ISA group 415 and the WirelessHART group 420. The LPFR 4 10 is not wired into the backbone of the network, but functions as a purely wireless node, which is different from the AP 405, which is wired into the backbone of the network through an Ethernet.

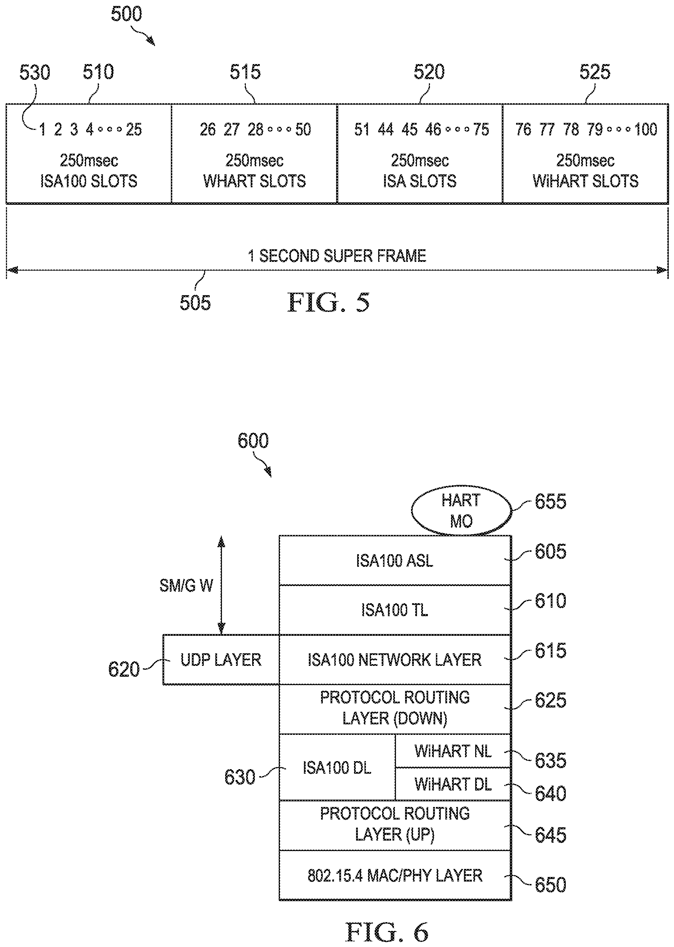

FIGURE 5 illustrates an example TDMA segregation on a single physical layer 500 according to this disclosure. As an example, the single physical layer 500 could represent the software used in a multi-protocol wireless network 104 of FIGURE 1. The single physical layer 500 could represent any other suitable programing for multi-protocol wireless sensor networks.

In access points with a single physical layer, the wireless protocols are segregated. TDMA segregation allows a single access point to support multiple standards, such as ISA100 and WirelessHART. Supporting multiple standards allows for communication with a greater number of devices and different models. The table of FIGURE 5 illustrates an exemplary segregation of wireless protocol slots.

The protocols must run at the same slot timings, for example, 10 msec. The frame is divided into time slots 530 based on the slot timing. A slot timing of 10 msec would provide for 100 slots in a one second frame. The slots are further divided into groupings based on wireless protocol, which each group can include 25 slots for a total of 250 msec. With 25 slots comprising a group, each wireless protocol would receive an allotment of two groups alternating in each one second frame. The total available TDMA time can also be split into fractional amount, e.g. 1/4, and alternately allocated to the wireless protocols and devices alternatively.

The field devices can be notified of the timing standards when initially connecting to the access point. Each field device would then know what timing increments to exchange signals with the access point using the respective protocol.

As shown in FIGURE 5, the physical layer 500 of a device can divide a repeating TDMA superframe 505 into four frames 510-525, where each frame 510-525 is divided into multiple time slots 530. In this particular example, the superframe 505 has a length of one second, and each frame 510-525 has a length of 250 ms. Note, however, that other lengths of time could be used for the superframe 505 or the frames 510-525.

Different protocols are used during different frames 510-525. In this example, the different protocols are interleaved, with ISA100 being used in frames 510 and 520 and WirelessHART being used in frames 515 and 525. However, the use of these two protocols in an interleaved manner is for illustration only. A device could support the use of other or additional protocols, more than two protocols, and any arrangement of the protocols within a superframe 505. For example, the use of the protocols need not be divided equally amongst the frames. As a particular example, if 75% of the devices communicating with a router are ISA 100 devices and 25% are WirelessHART devices, ISA100 could be used during three of every four frames, while WirelessHART could be used during one of every four frames. The allocation of protocols to frames could occur in any suitable manner, such as based on user inputs during system installation or at other times or dynamically.

The time slots 530 in the different frames 510-525 could have any suitable length(s). For example, the time slots 530 in the ISA100 frames 510 and 525 could each have a length of 11.7 ms, and the time slots 530 in the WHART frames 515 and 525 could each have a length of 10 ms. Other lengths for the time slots 530 could also be used, and the time slots need not have equal lengths across different frames or even within the same frame (such as when the last time slot in a frame is extended to encompass any remaining time in the frame).

By dividing time into multiple time slots that are allocated between ISA100 and WirelessHART devices, the physical layer 500 supports different devices operating according to different protocols. The TDMA structure shown here could be supported by the physical layer of any suitable device, such as in the communications unit 208. Moreover, this functionality can be obtained in existing routers that have already been installed, such as by performing a firmware upgrade on routers that support one protocol to allow those routers to communicate using a second protocol in different time slots.

FIGURE 6 illustrates an example AP/LPFRlayer implementation approach for a protocol stack 600 according to this disclosure. As an example, the protocol stack 600 using the AP/LPFR layer implementation approach could represent the software used in a multi-protocol wireless network 104 of FIGURE 1. The protocol stack 600 could represent any other suitable programing for multi-protocol wireless sensor networks.

As shown in FIGURE 6, the protocol stack 600 includes an ISA100 application sub-layer (ASL) 605, an ISA100 transport layer (TL) 610, and an ISA100 network layer 615. The transport layer 610 and the network layer 615 could support the standard OSI model functions for the ISA100 protocol. The application sub-layer 605 provides a level of abstraction by making it unnecessary for higher layers to know what types of services are available at the transport layer 610. A user datagram protocol (UDP) layer 620 supports communications with external devices, such as a gateway or backbone router.

Below the ISA100 network layer 615 is a protocol routing layer 625. The protocol routing layer 625 is responsible for performing the "down" protocol routing to direct outgoing data packets to either an ISA100 protocol stack or a WirelessHART protocol stack for transmission. In some embodiments, the protocol routing layer 625 analyzes a data packet, determines whether a transmitting device is an ISA100 device or a WirelessHART device, and routes the data packet stack based on the determination. For incoming data, the protocol routing layer 625 can route data packets to the ISA100 network layer 615.

The ISA100 protocol stack is implemented using an ISA100 data link (DL) layer 630, while the WirelessHART protocol stack is implemented using a WirelessHART network layer (NL) 635 and a WirelessHART data link (DL) layer 640. These layers 630-640 can implement the standard OSI model functions for the ISA100 and WirelessHART protocols.

A protocol routing layer 645 is responsible for performing the "up" protocol routing to direct incoming data packets to either the ISA100 protocol stack or the WirelessHART protocol stack for further processing. In some embodiments, the protocol routing layer 645 analyzes contents of a data packet to determine whether the packet contains data from an ISA100 device or a WirelessHART device. The protocol routing layer 645 then routes the data packet based on the determination. For outgoing data, the protocol routing layer 645 can route data packets to a medium access control (MAC)/physical (PHY) layer(s) 650.

The MAC/PHY layer(s) 650 support(s) communications over a wireless channel using the ISA100 and WirelessHART protocols. The specific protocol used to transmit or receive a data packet can vary based on the time slot in which the device is currently operating. For example, as shown in FIGURE 5, during the time slots 530 in the frames 510 and 520, the MAC/PHY layer(s) 650 can use the ISA100 protocol. During the time slots 530 in the frames 515 and 525, the MAC/PHY layer(s) 650 can use the WirelessHART protocol.

In this particular example, WirelessHART traffic can be routed to and from the backbone router or gateway via the ISA100 network layer 615. It may also be possible to route WirelessHART traffic over the ISA100 network. A HART management object (MO) 655 can be used to configure HART DL structures via the ISA100 network layer. Moreover, in particular embodiments, the protocol routing layer 645 can use templates and channels to transfer packets to the MAC/PHY layer(s) 650.

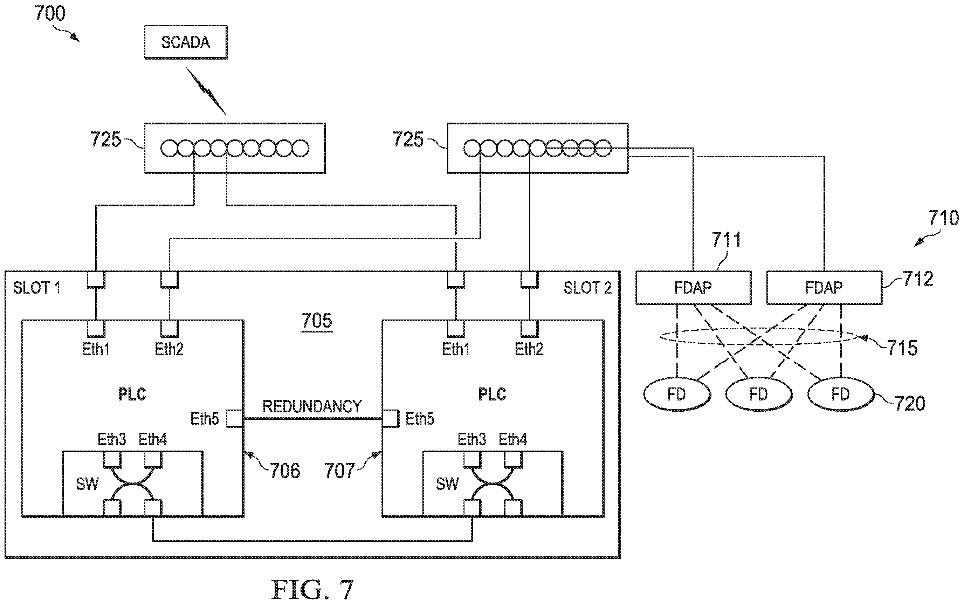

FIGURE 7 illustrates an example PLC wireless system 700 including redundant PLCs 705 with redundant field device access points (FDAPs) 710 having redundant links 715 to at least one field device (FD) 720 according to this disclosure.

The PLC wireless system 700 includes at least one PLC 705, such as primary PCL 706 and secondary PLC 707; at least one access point 710, such as primary access device 711 and secondary access device 712; and a plurality of redundant links between the access points 710 and the field device 720.

The primary PLC 706 continuously sends all the field devices 720 process values, status, diagnostics to secondary and continuously maintains the sync at all times. Both controllers Ethernet ports 725 are connected to switches and two AP 710 are connected to the switches for AP redundancy. The field devices 720 receive redundant connectivity with both the APs 711 and 712. With this topology and architecture, for any single point of failure either device loosing link with one AP 710, or a AP failure or a PLC failure, the system will be operational without loss of view or control.

FIGURE 8 illustrates an exemplary process 800 for a multi-protocol wireless sensor network integrated with an IEC 61131-3 environment according to this disclosure.

In operation 805, the system operates a first field device using a first protocol. The first protocol can be, for example, ISA 100.

In operation 810, the system operates a second field device using a second protocol. The second protocol can be, for example, WirelessHART.

In operation 815, the system communicates, using a first access point (AP), with the first field device using the first protocol and the second field device using the second protocol. A second AP can be used to communicate with the first field device and the second field device in a secondary role. The first AP and the second AP both include the capability to concurrently communicate using the first protocol and the second protocol. In certain embodiments, the first AP and the second AP are line power field routers that are wirelessly connected to both the PLC and the first field device and the second field device.

A time division multiple access (TDMA) structure can be used by the AP to communicate with the first field device and the second field device concurrently. The TDMA structure can be divided into a plurality of first time slots and a plurality of second time slots, where the first time slots correspond to the first protocol and the second time slots correspond to the second protocol. The TDMA structure can comprise multiple frames that alternate between frames of the first protocol and frames of the second protocol.

In operation 820, the system controls, using a programmable logic controller, the first field device and the second field device using an IEC 61131-3 language. A second PLC can operate to control the first field device and second field device in a secondary role, when the PLC operates in a primary role. The second PLC can assume the primary role when the PLC is detected as a point of failure in the multi-protocol wireless sensor network.

Although FIGURE 8 illustrates one example of a process 800 for integrating an 61131-3 environment with a multi-protocol wireless sensor network, various changes may be made to FIGURE 8. For example, while shown as a series of steps, various steps shown in FIGURE 8 could overlap, occur in parallel, occur in a different order, or occur multiple times . Moreover, some steps could be combined or removed and additional steps could be added according to particular needs.

In some embodiments, various functions described in this patent document are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc, a digital video disc, or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, e.g., a rewritable optical disc or an erasable memory device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of : A, B, and C" includes any of the following combinations: A, B, C, A and B, A and C, B and C, and A and B and C.

The description in the present application should not be read as implying that any particular element, step, or function is an essential or critical element that must be included in the claim scope. The scope of patented subject matter is defined only by the allowed claims.

## Claims

1. A multi-protocol wireless sensor network (300) comprising:
a first field device (335) configured to operate using a first protocol;
a second field device (325) configured to operate using a second protocol;
a first-access point (315) configured to communicate with the first field device using the first protocol and the second field device using the second protocol;
a second access point configured to communicate with the first field device and the second field device in a secondary role, each of the first access point and the second access point concurrently communicate using the first protocol and the second protocol with the first field device and the second field device; and
a first programmable logic controller 'PLC' (305) configured to control the first field device using the first protocol and the second field device using the second protocol, through the first and second access points,
wherein the network (300) including the first 'PLC' (305) as a primary 'PLC' (706) and a redundant 'PLC' (707) as secondary 'PLC' with redundant field device access points 'FDAPs' (710), including the first and second access point, having redundant links (715) to at least one field device 'FD' (720) including the first field device and the second field device, the primary 'PLC' (706) synchronizes process values, status, diagnostics of the field devices (720) to the secondary 'PLC' (707)

2. The multi-protocol wireless sensor network of Claim 1, wherein the first field device and the second field device are wireless.

3. The multi-protocol wireless sensor network of Claim 1, wherein:
the first protocol is ISA 100,
the second protocol is wireless highway addressable remote transducer 'WirelessHART', and
the first 'PLC' uses a IEC 61131-3 language to control the first field device and the second field device.

4. The multi-protocol wireless sensor network of Claim 1, wherein the redundant 'PLC' (707) configured to operate in a secondary role, wherein the first 'PLC' operates in a primary role.

5. The multi-protocol wireless sensor network of Claim 1, wherein the first and second access point is further configured to:
divide the time division multiple access 'TDMA' structure (500) into a plurality of first time slots (510) and a plurality of second time slots (515), wherein the first time slots are allocated for the first protocol and the second time slots are allocated for the second protocol.

6. A method comprising:
operating (805) a first field device (335) using a first protocol;
operating (810) a second field device (325) using a second protocol;
communicating (815), using a first-an access point (315), with the first field device using the first protocol and the second field device using the second protocol;
communicating, using a second access point, with the first field device and the second field device in a secondary role, each of the first access point and the second access point concurrently communicate using the first protocol and the second protocol with the first field device and the second field device; and controlling (820), using a first programmable logic controller 'PLC' (305), the first field device using the first protocol and the second field device using the second protocol, through the first and second access points;
wherein the first 'PLC' (305) as a primary 'PLC' (706) and a redundant 'PLC' (707) as secondary 'PLC' with redundant field device access points 'FDAPs' (710), including the first and second access point, having redundant links (715) to at least one field device 'FD' (720) including the first field device and the second field device, the primary 'PLC' (706) synchronizes process values, status, diagnostics of the field devices (720) to the secondary 'PLC' (707).

7. The method of Claim 6, wherein the first field device and the second field device are wireless.

8. The method of Claim 6, wherein:
the first protocol is ISA 100,
the second protocol is wireless highway addressable remote transducer 'WirelessHART' and
the first 'PLC' uses a IEC 61131-3 language to control the first field device and the second field device.

9. The method of Claim 6, further comprising:
operating the redundant 'PLC' (707) in a secondary role, wherein the first 'PLC' operates in a primary role.

10. The method of Claim 6, further comprising:
dividing, using the access point, the time division multiple access 'TDMA' structure (500) into a plurality of first time slots (510) and a plurality of second time slots (515), wherein the first time slots are allocated for the first protocol and the second time slots are allocated for the second protocol.

11. A non-transitory machine-readable medium (144) encoded with executable instructions that, when executed, cause one or more processors to:
operate (805) a first field device (335) using a first protocol;
operate (810) a second field device (325) using a second protocol; communicate, using a first- access point (315), with a first field device (335) using a first protocol and a second field device (325) using a second protocol; and
communicate, using a second access point, with the first field device and the second field device in a secondary role, each of the first access point and the second access point concurrently communicate using the first protocol and the second protocol with the first field device and the second field device; and
control the first field device using the first protocol and the second field device using the second protocol, through the first and second access points;
wherein the first 'PLC' (305) as a primary 'PLC' (706) and a redundant 'PLC' (707) as secondary 'PLC' with redundant field device access points 'FDAPs' (710), including the first and second access point, having redundant links (715) to at least one field device 'FD' (720) including the first field device and the second field device, the primary 'PLC' (706) synchronizes process values, status, diagnostics of the field devices (720) to the secondary 'PLC' (707)

## Patentansprüche

1. Drahtloses Mehrprotokoll-Sensornetzwerk (300), umfassend:
eine erste Feldvorrichtung (335), die so konfiguriert ist, dass sie unter Verwendung eines ersten Protokolls arbeitet;
eine zweite Feldvorrichtung (325), die so konfiguriert ist, dass sie unter Verwendung eines zweiten Protokolls arbeitet;
einen ersten Zugangspunkt (315), der so konfiguriert ist, dass er mit der ersten Feldvorrichtung unter Verwendung des ersten Protokolls und mit der zweiten Feldvorrichtung unter Verwendung des zweiten Protokolls kommuniziert;
einen zweiten Zugangspunkt, der so konfiguriert ist, dass er mit der ersten Feldvorrichtung und mit der zweiten Feldvorrichtung in einer sekundären Rolle kommuniziert, wobei jeder des ersten Zugangspunkts und des zweiten Zugangspunkts gleichzeitig unter Verwendung des ersten Protokolls und des zweiten Protokolls mit der ersten Feldvorrichtung und mit der zweiten Feldvorrichtung kommuniziert; und
eine erste speicherprogrammierbare Steuerung "SPS" (305), die so konfiguriert ist, dass sie die erste Feldvorrichtung unter Verwendung des ersten Protokolls und die zweite Feldvorrichtung unter Verwendung des zweiten Protokolls über den ersten und den zweiten Zugangspunkt steuert,
wobei das Netzwerk (300) die erste "SPS" (305) als primäre "SPS" (706) und eine redundante "SPS" (707) als sekundäre "SPS" mit redundanten Feldvorrichtungszugangspunkten "FDAPs" (710) einschließlich des ersten und des zweiten Zugangspunkts einschließt, die redundante Verbindungen (715) zu mindestens einer Feldvorrichtung "FD" (720) einschließlich der ersten Feldvorrichtung und der zweiten Feldvorrichtung aufweist, wobei die primäre "SPS" (706) Prozesswerte, Status, Diagnose der Feldvorrichtungen (720) mit der sekundären "SPS" (707) synchronisiert.

2. Drahtloses Mehrprotokoll-Sensornetzwerk nach Anspruch 1, wobei die erste Feldvorrichtung und die zweite Feldvorrichtung drahtlos sind.

3. Drahtloses Mehrprotokoll-Sensornetzwerk nach Anspruch 1, wobei:
das erste Protokoll ISA 100 ist,
das zweite Protokoll ein drahtloser Highway Addressable Remote Transducer "WirelessHART" ist; und
die erste "SPS" eine Sprache gemäß IEC 61131-3 verwendet, um die erste Feldvorrichtung und die zweite Feldvorrichtung zu steuern.

4. Drahtloses Mehrprotokoll-Sensornetzwerk nach Anspruch 1, wobei die redundante "SPS" (707) so konfiguriert ist, dass sie in einer sekundären Rolle arbeitet, wobei die erste "SPS" in einer primären Rolle arbeitet.

5. Drahtloses Mehrprotokoll-Sensornetzwerk nach Anspruch 1, wobei der erste und der zweite Zugangspunkt ferner konfiguriert sind zum:
Aufteilen der Zeitmultiplex-Mehrfachzugriffs "TDMA"-Struktur (500) in eine Vielzahl von ersten Zeitfenstern (510) und in eine Vielzahl von zweiten Zeitfenstern (515), wobei die ersten Zeitfenster dem ersten Protokoll zugewiesen werden und die zweiten Zeitfenster dem zweiten Protokoll zugewiesen werden.

6. Verfahren, umfassend:
Betreiben (805) einer ersten Feldvorrichtung (335) unter Verwendung eines ersten Protokolls;
Betreiben (810) einer zweiten Feldvorrichtung (325) unter Verwendung eines zweiten Protokolls;
Kommunizieren (815), unter Verwendung eines ersten Zugangspunkts (315), mit der ersten Feldvorrichtung unter Verwendung des ersten Protokolls und mit der zweiten Feldvorrichtung unter Verwendung des zweiten Protokolls;
Kommunizieren, unter Verwendung eines zweiten Zugangspunkts, mit der ersten Feldvorrichtung und mit der zweiten Feldvorrichtung in einer sekundären Rolle, wobei jeder des ersten Zugangspunkts und des zweiten Zugangspunkts gleichzeitig unter Verwendung des ersten Protokolls und des zweiten Protokolls mit der ersten Feldvorrichtung und mit der zweiten Feldvorrichtung kommuniziert; und Steuern (820), unter Verwendung einer ersten speicherprogrammierbaren Steuerung "SPS" (305), der ersten Feldvorrichtung unter Verwendung des ersten Protokolls und der zweiten Feldvorrichtung unter Verwendung des zweiten Protokolls über den ersten und den zweiten Zugangspunkt;
wobei die erste "SPS" (305) als primäre "SPS" (706) und eine redundante "SPS" (707) als sekundäre "SPS" mit redundanten Feldvorrichtungszugangspunkten "FDAPs" (710) einschließlich des ersten und des zweiten Zugangspunkts redundante Verbindungen (715) zu mindestens einer Feldvorrichtung "FD" (720) einschließlich der ersten Feldvorrichtung und der zweiten Feldvorrichtung aufweisen, wobei die primäre "SPS" (706) Prozesswerte, Status, Diagnosen der Feldvorrichtungen (720) mit der sekundären ʺSPS‴ (707) synchronisiert.

7. Verfahren nach Anspruch 6, wobei die erste Feldvorrichtung und die zweite Feldvorrichtung drahtlos sind.

8. Verfahren nach Anspruch 6, wobei:
das erste Protokoll ISA 100 ist,
das zweite Protokoll ein drahtloser Highway Addressable Remote Transducer "WirelessHART" ist und
die erste "SPS" eine Sprache gemäß IEC 61131-3 verwendet, um die erste Feldvorrichtung und die zweite Feldvorrichtung zu steuern.

9. Verfahren nach Anspruch 6, ferner umfassend:
Betreiben der redundanten "SPS" (707) in einer sekundären Rolle, wobei die erste "SPS" in einer primären Rolle arbeitet.

10. Verfahren nach Anspruch 6, ferner umfassend:
Aufteilen, unter Verwendung des Zugangspunkts, der Zeitmultiplex-Mehrfachzugriffs "TDMA"-Struktur" (500) in eine Vielzahl von ersten Zeitfenstern (510) und in eine Vielzahl von zweiten Zeitfenstern (515), wobei die ersten Zeitfenster dem ersten Protokoll zugewiesen werden und die zweiten Zeitfenster dem zweiten Protokoll zugewiesen werden.

11. Nichtflüchtiges maschinenlesbares Medium (144), das mit ausführbaren Anweisungen codiert ist, die bei Ausführung einen oder mehrere Prozessoren veranlassen zum:
Betreiben (805) einer ersten Feldvorrichtung (335) unter Verwendung eines ersten Protokolls;
Betreiben (810) einer zweiten Feldvorrichtung (325) unter Verwendung eines zweiten Protokolls; Kommunizieren, unter Verwendung eines ersten Zugangspunkts (315), mit einer ersten Feldvorrichtung (335) unter Verwendung eines ersten Protokolls und mit einer zweiten Feldvorrichtung (325) unter Verwendung eines zweiten Protokolls; und
Kommunizieren, unter Verwendung eines zweiten Zugangspunkts, mit der ersten Feldvorrichtung und mit der zweiten Feldvorrichtung in einer sekundären Rolle, wobei jeder des ersten Zugangspunkts und des zweiten Zugangspunkts gleichzeitig unter Verwendung des ersten Protokolls und des zweiten Protokolls mit der ersten Feldvorrichtung und mit der zweiten Feldvorrichtung kommuniziert; und
Steuern der ersten Feldvorrichtung unter Verwendung des ersten Protokolls und der zweiten Feldvorrichtung unter Verwendung des zweiten Protokolls über den ersten und den zweiten Zugangspunkte;
wobei die erste "SPS" (305) als primäre "SPS" (706) und eine redundante "SPS" (707) als sekundäre "SPS" mit redundanten Feldvorrichtungszugangspunkten "FDAPs" (710) einschließlich des ersten und des zweiten Zugangspunkts redundante Verbindungen (715) zu mindestens einer Feldvorrichtung "FD" (720) einschließlich der ersten Feldvorrichtung und der zweiten Feldvorrichtung aufweisen, wobei die primäre "SPS" (706) Prozesswerte, Status, Diagnosen der Feldvorrichtungen (720) mit der sekundären "SPS"' (707) synchronisiert.

## Revendications

1. Réseau de capteurs sans fil à protocoles multiples (300) comprenant :
un premier dispositif de terrain (335) configuré pour fonctionner au moyen d'un premier protocole ;
un second dispositif de terrain (325) configuré pour fonctionner au moyen d'un second protocole ;
un premier point d'accès (315) configuré pour communiquer avec le premier dispositif de terrain au moyen du premier protocole et avec le second dispositif de terrain au moyen du second protocole ;
un second point d'accès configuré pour communiquer avec le premier dispositif de terrain et avec le second dispositif de terrain dans un rôle secondaire, chacun parmi le premier point d'accès et le second point d'accès communique simultanément au moyen du premier protocole et du second protocole avec le premier dispositif de terrain et le second appareil de terrain ; et
un premier contrôleur programmable «PLC» (305) configuré pour commander le premier dispositif de terrain au moyen du premier protocole et le second dispositif de terrain au moyen du second protocole, par l'intermédiaire des premier et second points d'accès,
dans lequel le réseau (300) incluant le premier «PLC» (305) en tant que «PLC» principal (706) et un «PLC» redondant (707) en tant que «PLC» secondaire avec des points d'accès de dispositif de terrain redondants «FDAP» (710), incluant le premier et le second point d'accès, ayant des liaisons redondantes (715) vers au moins un dispositif de terrain «FD» (720) incluant le premier dispositif de terrain et le second dispositif de terrain, le «PLC» principal (706) synchronise les valeurs de processus, l'état, le diagnostic des dispositifs de terrain (720) avec le «PLC» secondaire (707).

2. Réseau de capteurs sans fil à protocoles multiples selon la revendication 1, dans lequel le premier dispositif de terrain et le second dispositif de terrain sont sans fil.

3. Réseau de capteurs sans fil à protocoles multiples selon la revendication 1, dans lequel :
le premier protocole est ISA 100,
le second protocole est le transducteur distant adressable d'autoroute sans fil «WirelessHART» et
le premier «PLC» utilise un langage CEI 61131-3 pour commander le premier appareil de terrain et le second appareil de terrain.

4. Réseau de capteurs sans fil à protocoles multiples selon la revendication 1, dans lequel le «PLC» redondant (707) est configuré pour fonctionner dans un rôle secondaire, dans lequel le premier «PLC» fonctionne dans un rôle principal.

5. Réseau de capteurs sans fil à protocoles multiples selon la revendication 1, dans lequel les premier et second points d'accès sont en outre configurés pour :
diviser la structure d'accès multiple par répartition dans le temps «AMRT» (500) en une pluralité de premiers créneaux temporels (510) et une pluralité de seconds créneaux temporels (515), les premiers créneaux temporels étant attribués au premier protocole et les seconds créneaux temporels étant attribués au second protocole.

6. Procédé comprenant :
le fonctionnement (805) d'un premier dispositif de terrain (335) au moyen d'un premier protocole ;
le fonctionnement (810) d'un second dispositif de terrain (325) au moyen d'un second protocole ;
la communication (815), au moyen d'un premier point d'accès (315), avec le premier dispositif de terrain au moyen du premier protocole et avec le second dispositif de terrain au moyen du second protocole ;
la communication, au moyen d'un second point d'accès, avec le premier dispositif de terrain et avec le second dispositif de terrain dans un rôle secondaire, chacun parmi le premier point d'accès et le second point d'accès communique simultanément au moyen du premier protocole et du second protocole avec le premier dispositif de terrain et avec le second dispositif de terrain ; et la commande (820), à l'aide d'un premier contrôleur programmable «PLC» (305), du premier dispositif de terrain au moyen du premier protocole et du second dispositif de terrain au moyen du second protocole, par l'intermédiaire des premier et second points d'accès ;
dans lequel le premier «PLC» (305) en tant que «PLC» principal (706) et un «PLC» redondant (707) en tant que «PLC» secondaire avec des points d'accès de dispositif de terrain redondants «FDAP» (710), incluant le premier et le second point d'accès, ayant des liaisons redondantes (715) vers au moins un dispositif de terrain «FD» (720) incluant le premier dispositif de terrain et le second dispositif de terrain, le «PLC» principal (706) synchronise les valeurs de processus, l'état, le diagnostic des dispositifs de terrain (720) avec le «PLC» secondaire (707).

7. Procédé selon la revendication 6, dans lequel le premier dispositif de terrain et le second dispositif de terrain sont sans fil.

8. Procédé selon la revendication 6, dans lequel :
le premier protocole est ISA 100,
le second protocole est le transducteur distant adressable d'autoroute sans fil «WirelessHART» et
le premier «PLC» utilise un langage CEI 61131-3 pour commander le premier appareil de terrain et le second appareil de terrain.

9. Procédé selon la revendication 6, comprenant en outre :
le fonctionnement du «PLC» redondant (707) dans un rôle secondaire, dans lequel le premier «PLC» fonctionne dans un rôle primaire.

10. Procédé selon la revendication 6, comprenant en outre :
la division, au moyen du point d'accès, de la structure d'accès multiple par répartition dans le temps «AMRT» (500) en une pluralité de premiers créneaux temporels (510) et une pluralité de seconds créneaux temporels (515), les premiers créneaux temporels étant attribués au premier protocole et les seconds créneaux temporels étant attribués au second protocole.

11. Support lisible par machine non transitoire (144) codé avec des instructions exécutables qui, lorsqu'elles sont exécutées, amènent un ou plusieurs processeurs à :
faire fonctionner (805) un premier dispositif de terrain (335) au moyen d'un premier protocole ;
faire fonctionner (810) un second dispositif de terrain (325) au moyen d'un second protocole; communiquer, au moyen d'un premier point d'accès (315), avec un premier dispositif de terrain (335) au moyen d'un premier protocole et avec un second dispositif de terrain (325) au moyen d'un second protocole ; et
communiquer, au moyen d'un second point d'accès, avec le premier dispositif de terrain et avec le second dispositif de terrain dans un rôle secondaire, chacun parmi le premier point d'accès et le second point d'accès communique simultanément au moyen du premier protocole et du second protocole avec le premier dispositif de terrain et avec le second dispositif de terrain ; et
commander le premier dispositif de terrain au moyen du premier protocole et le second dispositif de terrain au moyen du second protocole, par l'intermédiaire des premier et second points d'accès ;
dans lequel le premier «PLC» (305) en tant que «PLC» principal (706) et un «PLC» redondant (707) en tant que «PLC» secondaire avec des points d'accès de dispositif de terrain redondants «FDAP» (710), incluant le premier et le second point d'accès, ayant des liaisons redondantes (715) vers au moins un dispositif de terrain «FD» (720) incluant le premier dispositif de terrain et le second dispositif de terrain, le «PLC» primaire (706) synchronise les valeurs de processus, l'état, le diagnostic des dispositif de terrain (720) avec le «PLC» secondaire (707).
